# EUROPÄISCHE PATENTSCHRIFT

(11) **EP 0 501 984 B1**
(45) Veröffentlichungstag und Bekanntmachung des Hinweises auf die Patenterteilung: **27.12.1995**
(21) Anmeldenummer: 90916460.0
(22) Anmeldetag: 17.11.1990
(51) Int. Cl.: H04N 1/08, H04N 1/04

(54) **VORRICHTUNG ZUM AUFSPANNEN VON BLATTFÖRMIGEM AUFZEICHNUNGSMATERIAL**
DEVICE FOR CLAMPING RECORDING SUBSTRATES IN SHEET FORM
DISPOSITIF DE FIXATION D'UN MATERIAU DE REPRODUCTION EN FEUILLES

(30) Priorität: 20.11.1989 DE 3938480
(43) Veröffentlichungstag der Anmeldung: 09.09.1992
(73) Patentinhaber: Linotype AG, D-65731 Eschborn (DE)
(72) Erfinder: BALZEIT, Ralf, D-2308 Preetz (DE); LASSEN, Bernd, D-2312 Mönkeberg (DE)
(86) Internationale Anmeldenummer: DE9000888
(87) Internationale Veröffentlichungsnummer: WO9107842

(56) Entgegenhaltungen:
- DE-A- 3 230 676
- DE-B- 2 209 515
- US-A- 3 908 981
- US-A- 4 268 841

## Beschreibung

Die Erfindung bezieht sich auf das Gebiet der elektronischen Reproduktionstechnik und betrifft eine Vorrichtung zum Aufspannen von blattförmigem Aufzeichnungsmaterial auf eine Aufzeichnungstrommel mit Vakuumansaugung bei einem elektronischen Reproduktionsgerät sowie ein Verfahren zum Aufspannen. Das elektronische Reproduktionsgerät ist beispielsweise ein Farb-Scanner oder ein Farb-Recorder zur Herstellung von Farbauszügen für den Mehrfarbendruck.

Bei einem solchen elektronischen Reproduktionsgerät wird blattförmiges Filmmaterial, auch Filmfahnen genannt, auf die Aufzeichnungstrommel aufgespannt und dort durch Vakuumansaugung fixiert. Die aufgespannten Filmfahnen werden durch ein Aufzeichnungsorgan punkt- und zeilenweise belichtet, dann wieder von der Aufzeichnungstrommel abgespannt und entwickelt. Die entwickelten Filmfahnen sind die Farbauszüge für den Mehrfarbendruck.

Die Filmfahnen können bereits als Blattfilmmaterial vorliegen, das zum Aufspannen einer Blattfilm-Kassette entnommen wird, oder vor dem Aufspannen von einem in einer Rollfilm-Kassette befindlichen Rollfilmmaterial abgeschnitten werden.

Für einen effektiven Einsatz eines elektronischen Reproduktionsgerätes ist es erforderlich, insbesondere die Vorbereitungs- und Einstellzeiten gegenüber den für die eigentliche Filmbelichtung benötigten Zeiten zu verringern. Dies kann unter anderem dadurch geschehen, daß möglichst viele, normalerweise vom Bediener auszuführende Arbeitsschritte, wie beispielsweise das Auf- und Abspannen der Filmfahnen auf die bzw. von der Aufzeichnungstrommel automatisiert werden. Hinzu kommt der Wunsch, Filmfahnen unterschiedlicher Formate, insbesondere großformatige Filmfahnen, beispielsweise zur Reproduktion von Postern, belichten zu können.

Aus der DE-B-22 09 515 ist bereits ein elektronisches Reproduktionsgerät mit einer Vorrichtung zum Aufspannen von blattförmigem Aufzeichnungsmaterial auf eine Aufzeichnungstrommel mit Vakuumansaugung bekannt.

Die Aufzeichnungstrommel ist ein Hohlzylinder,derdurch Deckel verschlossen ist. An den Deckeln sind Wellenzapfen befestigt, mit denen die Aufzeichnungstrommel am Geräteträger des Reproduktionsgerätes drehbar gelagert ist. Die Wandung des Hohlzylinders ist mit Sauglöchern zur Ansaugung der Filmfahnen an die Trommeloberfläche versehen. Die Sauglöcher stehen mit dem Trommelinnenraum in Verbindung. Ein Wellenzapfen ist hohl, wodurch ein Saugkanal entsteht, der den Trommelinnenraum über eine am Wellenzapfen befestigte Drehdurchführung und eine ortsfeste Saugleitung mit einer stationären Vakuum-Pumpe verbindet.

Die zu belichtenden Filmfahnen, die sich in einer Blattfilm-Kassette befinden, werden bei dem bekannten Reproduktionsgerät mittels eines manuell betätigbaren Rollen- und Hebelmechanismus mit den Registerlochungen über Registerstifte gehängt, die sich auf der Aufzeichnungstrommel befinden. Dann wird die Vakuum-Pumpe eingeschaltet und die Aufzeichnungstrommel gedreht, wodurch die Filmfahnen aus der Blattfilm-Kassette gezogen, um die drehende Aufzeichnungstrommel gewickelt und durch das Vakuum auf der Trommeloberfläche fixiert werden. Nach der Belichtung werden die Filmfahnen abgespannt und durch den Rollen- und Hebelmechanismus wieder in die Rollfilm-Kassette zurücktransportiert.

Die aus der DE-B-22 09 515 bekannte Vorrichtung hat den Nachteil, daß nur mit Registerlochungen versehene Filmfahnen vorgegebener Formate aufgespannt werden können und daß das Auf- und Abspannen nur unter Mitwirkung eines Bedieners erfolgen kann.

Aus der US-A-4,268,841 ist ein elektronisches Reproduktionsgerät bekannt, das bereits eine Vorrichtung zum automatischen Aufspannen von blattförmigem Aufzeichnungsmaterial auf eine Aufzeichnungstrommel, zur Vakuumansaugung des Aufzeichnungsmaterials an die Aufzeichnungstrommel und zum automatischen Abspannen des belichteten Aufzeichnungsmaterials von der Aufzeichnungstrommel aufweist. Das blattförmige Aufzeichnungsmaterial wird von einer Versorgungsstation automatisch über eine Transporteinrichtung zur Aufzeichnungstrommel transportiert, mit Hilfe eines Ringkanals zwischenTrommeloberfläche und Gehäusewand um die Aufzeichnungstrommel gewickelt und dort durch Vakuumansaugung fixiert. Nach der Belichtung wird das Aufzeichnungsmaterial ebenfalls automatisch von der Aufzeichnungstrommel abgespannt und einer Austrittsöffnung im Gerät zur Weiterverarbeitung zugeführt. Die Mantelfläche der Aufzeichnungstrommel ist mit in Rotationsrichtung angeordneten Sauglöchern versehen, die über den Innenraum der Aufzeichnungstrommel und eine Saugleitung in der Welle mit einer stationären Vakuum-Pumpe verbunden sind. In der Saugleitung befindet sich eine Vakuum-Steuereinrichtung, mit der das Vakuum für die Sauglöcher ein- und ausgeschaltet oder auf einen Zwischenwert eingestellt werden kann.

Die aus der US-A-4,268,841 bekannte Vorrichtung hat den Nachteil, daß nur blattförmiges Aufzeichnungsmaterial auf- und abgespannt werden kann und daß keine speziellen Maßnahmen zum sicheren, faltenfreien Aufspannen von Aufzeichnungsmaterial unterschiedlicher Formate angegeben sind, die einen reibungslosen, automatischen Ablauf garantieren.

Die aus der DE-B-22 09 515 und der US-A-4,268,841 bekannten Vorrichtungen haben den weiteren Nachteil, daß beim Einschalten der Vakuum-Pumpe zu Beginn des Aufspannvorganges alle Sauglöcher der Aufzeichnungstrommel gleichzeitig mit Vakuum beaufschlagt werden. Dadurch entstehen insbesondere bei kleinformatigen Filmfahnen hohe Vakuumverluste, da nur eine geringe Anzahl von Sauglöchern durch die Filmfahne bedeckt wird.

Durch die hohen Vakuumverluste ist dann kein sicheres Aufspannen der Filmfahnen während der Belichtungszeit, in der sich die Aufzeichnungstrommel mit hoher Geschwindigkeit dreht, gewährleistet. Die Saugwirkung und damit die Fixierung der Filmfahnen kann zwar durch die Installation einer Vakuum-Pumpe mit höherer Nennleistung verbessert werden, dies wäre aber aufwendig.

Zur Verringerung der Vakuumverluste ist es schon bekannt, jeweils die von der momentan aufgespannten Filmfahne nicht abgedeckten Sauglöcher durch Klebestreifen abzudichten oder eine Aufzeichnungstrommel zu verwenden, bei der die nicht abgedeckten Sauglöcher selbsttätig mit Ventilen verschlossen werden. Die Abdichtung der Sauglöcher durch Klebestreifen ist zeitraubend und durch selbsttätig arbeitende Ventile aufwendig und unsicher.

Es ist auch schon bekannt, die Aufzeichnungstrommel durch Querwände in einzelne zuschaltbare Vakuumkammern zu unterteilen. In diesem Fall läßt sich eine Verringerung der Vakuumverluste dadurch erreichen, daß jeweils nur diejenigen Vakuumkammern aktiviert werden, die von der axialen Formatlänge her momentan an der Fixierung der Filmfahnen beteiligt sind.

Aus der DE-A-32 30 676 ist bereits eine Vakuum-Aufspannvorrichtung bekannt, die zur Fixierung von blattförmigem Aufzeichnungsmaterial auf einer Aufzeichnungstrommel eine Kombination aus pneumatischen und mechanischen Komponenten verwendet. Die Sauglöcher der Aufzeichnungstrommel sind in mindestens zwei Gruppen zusammengefaßt, von denen jede eine oder mehrere Reihen von untereinander verbundenen Sauglöchern umfaßt. Die einzelnen Saugloch-Gruppen stehen durch Drosselleitungen untereinander in Verbindung. Mindestens eine Gruppe ist an eine stationäre Vakuumerzeugung angeschlossen.

Durch Zuschalten einzelner Saugloch-Gruppen oder Saugloch-Reihen wird erreicht, daß Aufzeichnungsmaterial verschiedener Formate ohne hohe Vakuumverluste aufgespannt werden kann. Mittel zur automatischen Steuerung der Ventile und zum Transport des Aufzeichnungsmaterials zu oder von der Aufzeichnungstrommel sind nicht angegeben.

Die aus der DE-A-32 30 676 bekannte Vorrichtung hat somit den Nachteil, daß die Zuführung des blattförmigen Aufzeichnungsmaterials von Hand erfolgen muß und daß die Umschaltung der Saugloch-Gruppen beim Auf- oder Abspannvorgang nicht automatisch in Abhängigkeit von der Drehbewegung der Aufsichstrommel bzw. von der jeweiligen Umschlingung des Aufzeichnungsmaterials um die Aufzeichnungstrommel und damit in Abhängigkeit vom jeweiligen Format des aufzuspannenden Aufzeichnungsmaterials erfolgt.

In der Reproduktionstechnik geht die Tendenz dahin, ungelochtes Rollfilmmaterial zu verwenden und die jeweils erforderlichen Filmlängen von dem Rollfilmmaterial abzuschneiden und aufzuspannen. Hinzu kommt der Wunsch, beliebige Formate auf- und abspannen zu können. Die Praxis hat gezeigt, daß es schwierig ist, insbesondere großformatige Filmfahnen genau und faltenfrei auf die Aufzeichnungstrommel aufzuspannen. Das genaue und glatte Aufspannen der Filmfahnen ist aber eine unerläßliche Voraussetzung fürdie Belichtung von passergenauen Farbauszügen und fürdie Herstellung qualitativ hochwertiger Mehrfarbendrucke.

Der Erfindung liegt daher die Aufgabe zugrunde, eine Vorrichtung und ein Verfahren zum Aufspannen von blattförmigen Aufzeichnungsmaterial auf eine Aufzeichnungstrommel mit Vakuumansaugung anzugeben, welche das Aufspannen von insbesondere großformatigem Aufzeichnungsmaterial und das sichere Fixieren von Aufzeichnungsmaterial unterschiedlicher Formate auf der Aufzeichnungstrommel bei wirtschaftlicher Vakuumerzeugung ermöglichen, so daß stets ein reibungsloser Arbeitsablauf gewährleistet ist.

Diese Aufgabe wird in bezug auf die Vorrichtung durch die Merkmale des Patentanspruches 1 und in bezug auf das Verfahen durch die Merkmale des Patentanspruches 15 gelöst. Vorteilhafte Weiterbildungen sind in den Unteransprüchen angegeben.

Die Erfindung wird im folgenden anhand der Fig. 1 bis 6 näher erläutert.

Es zeigen:
- Fig. 1: eine perspektivische Ansicht einer Aufspann-Vorrichtung mit Aufzeichnungstrommel für ein elektronisches Reproduktionsgerät;
- Fig. 2: den prinzipiellen Aufbau einer Aufzeichnungstrommel mit einem Vakuum-Verteiler;
- Fig.3: die Aufspann-Vorrichtung während der einzelnen Aufspannphasen;
- Fig.4: ein Ausführungsbeispiel für eine Aufspann-Vorrichtung;
- Fig. 5: die Steuerung der Ventile; und
- Fig.6: ein weiteres Ausführungsbeispiel für eine Aufspann-Vorrichtung.

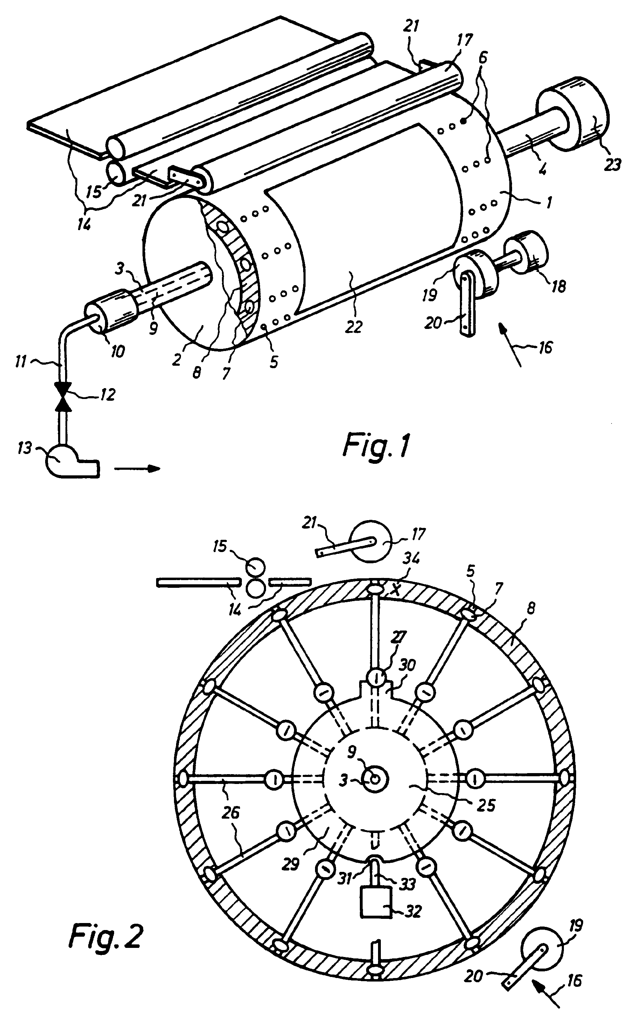

Fig. 1 zeigt eine Aufspann-Vorrichtung mit Aufzeichnungstrommel eines nicht näher dargestellten elektronischen Reproduktionsgerätes in perspektivischer Ansicht.

Die Aufzeichnungstrommel 1 ist ein Hohlzylinder, der durch Deckel 2 verschlossen ist. An den Deckeln 2 sind Wellenzapfen 3 und 4 angebracht, die an dem Geräteträger des Reproduktionsgerätes drehbar gelagert sind. Die Trommeloberfläche ist mit Sauglöchern 5 versehen, welche in axial zur Trommelachse verlaufenden Reihen angeordnet sind. Die umfangsmäßigen Abstände der Saugloch-Reihen 6 sind in zweckmäßiger Weise an die gängigen Formate der zu belichtenden Filmfahnen angepaßt, d. h. die Abstände der Saugloch-Reihen 6 voneinander sind derart gewählt, daß die Anfangs- und Endbereiche der aufgespannten Filmfahnen jeweils unter einer Saugloch-Reihe 6 liegen. Die Sauglöcher 5 der einzelnen Saugloch-Reihen 6 münden in Saugkanälen 7, die in der Wandung 8 des Hohlzylinders axial zur Trommelachse verlaufen. Von diesen Saugkanälen 7 sind in der Figur nur einige im Schnittbild sichtbar. Der Wellenzapfen 3 weist eine axiale Saugbohrung 9 auf. An dem Wellenzapfen 3 befindet sich eine Vakuum-Drehdurchführung 10, welche die Saugbohrung 9 in dem sich drehenden Wellenzapfen 3 mit einer ortsfesten Vakuumleitung 11 verbindet. Die Vakuumleitung 11 ist über ein steuerbares Nebenluft-Ventil 12 an einer ein- und ausschaltbaren Vakuum-Pumpe 13 angeschlossen.

Die zu belichtenden Filmfahnen können manuell oder automatisch zur Aufzeichnungstrommel 1 transportiert und aufgespannt werden. Im dargestellten Ausführungsbeispiel ist eine automatische Zuführung und Aufspannung der zu belichtenden Filmfahnen dargestellt. Dazu ist eine Film-Transportfläche 14 vorhanden, welche die Filmfahnen mittels eines Transport-Rollenpaares 15 zur Trommeloberfläche transportiert. Die Filmfahnen können einer Blattfilm-Kassette entnommen oder aber entsprechend der erforderlichen Formatlänge von einem Rollfilmmaterial abgeschnitten werden, das sich in einer Rollfilm-Kassette befindet.

Die Aufspann-Vorrichtung weist außerdem einen Positionierantrieb 16 und eine Andruckrolle 17 auf. Der Positionierantrieb 16 besteht aus einem durch einen Motor 18 angetriebenen Reibrad 19, das mittels eines Hebels 20 an die Aufzeichnungstrommel 1 verschwenkbar ist. Der Positionierantrieb 16 dient zur Drehung der Aufzeichnungstrommel 1 in verschiedene Positionen beim Auf- und Abspannen der Filmfahnen. Die Andruckrolle 17 ist ebenfalls mittels eines Hebels 21 an die Aufzeichnungstrommel 1 verschwenkbar und in dem Bereich angeordnet, in dem die Anfänge der zur Aufzeichnungstrommel 1 transportierten Filmfahnen die Trommeloberfläche berühren. In der Figur ist eine bereits auf die Aufzeichnungstrommel 1 aufgespannte und durch Vakuum fixierte Filmfahne 22 dargestellt. Während der Belichtung der Filmfahne 22 wird die Aufzeichnungstrommel 1 von einem mit dem Wellenzapfen 4 gekoppelten Hauptmotor 23 angetrieben, wobei der Positionierantrieb 16 und die Andruckrolle 17 wie gezeigt von der Trommeloberfläche abgeschwenkt ist.

Die Aufzeichnungstrommel 1 weist einen in der Figur nicht dargestellten steuerbaren Vakuum-Verteiler auf, der beim Aufspannen der Filmfahnen 22 die einzelnen Saugloch-Reihen 6 in Abhängigkeit von dem jeweiligen Drehwinkel der Aufzeichnungstrommel 1 bzw. von der momentanen Umschlingung der Filmfahnen 22 um die Aufzeichnungstrommel 1 nacheinander mit Vakuum beaufschlagt und der jeweils nur so viele Saugloch-Reihen 6 zuschaltet, wie auf die Umfangslänge der momentan aufgespannten Filmfahnen 22 entfallen.

Durch das schrittweise Zuschalten der Saugloch-Reihen 6 entsprechend der jeweiligen Umschlingung der Filmfahnen 22 wird in vorteilhafterweise ein genaues und faltenfreies Aufspannen insbesondere großformatiger Filmfahnen und aufgrund der geringen Vakuumverluste eine sichere Fixierung der Filmfahnen auf der Trommeloberfläche während der Belichtung erreicht.

Aufbau der Aufspann-Vorrichtung und der Aufzeichnungstrommel sowie die Betriebsweise der Aufspann-Vorrichtung werden nachfolgend näher erläutert.

Fig. 2 zeigt den prinzipiellen Aufbau von Aufzeichnungstrommel und Vakuum-Verteiler in einem Schnittbild durch die Aufzeichnungstrommel 1.

In der Wandung 8 der Aufzeichnungstrommel 1 sind die axial verlaufenden Saugkanäle 7 sichtbar, in welche die Sauglöcher 5 der einzelnen Saugloch-Reihen 6 münden. Im Wellenzapfen 3 ist die Saugbohrung 9 zu erkennen, die mit der nicht dargestellten Vakuum-Pumpe 13 in Verbindung steht. Die Saugbohrung 9 mündet in einer zylinderförmigen Vakuum-Kammer 25 im Trommelinnenraum. Die Vakuumkammer 25 ist über radial zur Trommelachse verlaufende Verteilerleitungen 26, in denen sich steuerbare Ventile 27 befinden, an die einzelnen Saugkanäle 7 bzw. Saugloch-Reihen 6 angeschlossen. Die Ventile 27, die kreisförmig um die Trommelachse angeordnet sind, können die einzelnen Saugkanäle 7 selektiv mit der Vakuum-Kammer 25 verbinden oder von ihr abtrennen.

Im dargestellten Ausführungsbeispiel sind die Ventile 27 durch eine Steuerscheibe 29 mechanisch steuerbar. Alternativ dazu können beispielsweise auch pneumatische oder elektrisch steuerbare Ventile Verwendung finden.

Die Steuerscheibe 29, die an ihrem Umfang einen Steuerfinger 30 und eine Nut 31 aufweist, ist auf dem Wellenzapfen 3 mit einer Gleitpassung gelagert. In die Nut 31 der Steuerscheibe 29 läßt sich mittels eines ortsfesten Stellorgans 32 ein Arretierstift 33 einführen, der die Steuerscheibe 29 in einer bestimmten Stellung blockiert. Durch Drehen der Aufzeichnungstromme 1 bewegen sich dann die Ventile 27 an dem Steuerfinger 30 der blockierten Steuerscheibe 29 vorbei, der die Ventile 27 nacheinander in Abhängigkeit von der Drehrichtung der Aufzeichnungstrommel 1 öffnet oder schließt, wobei die Ventile 27 in der jeweils eingenommenen Arbeitsstellung verharren.

Die jeweilige Arbeitsstellung der Ventile 27 ist durch Striche 28 angedeutet, wobei ein in Richtung einer Verteilerleitung 26 verlaufender Strich 28 ein geöffnetes Ventil 27 und ein senkrecht zu Verteilerleitung 26 verlaufender Strich 28 ein geschlossenes Ventil 27 andeutet.
Die Gleitpassung, mit der die Steuerscheibe 29 auf dem Wellenzapfen 3 gelagert ist, ist so beschaffen, daß der Wellenzapfen 3 einerseits bei blockierter Steuerscheibe 29 ohne nennenswerte Reibung rotiert und andererseits die Steuerscheibe 29 ohne Schlupf in der bei Freigabe durch den Arretierstift 33 eingenommenen relativen Position zur Aufzeichnungstrommel 1 mitnimmt, wobei bei Fortsetzung der Trommeldrehung keine weiteren Ventile 27 betätigt werden.

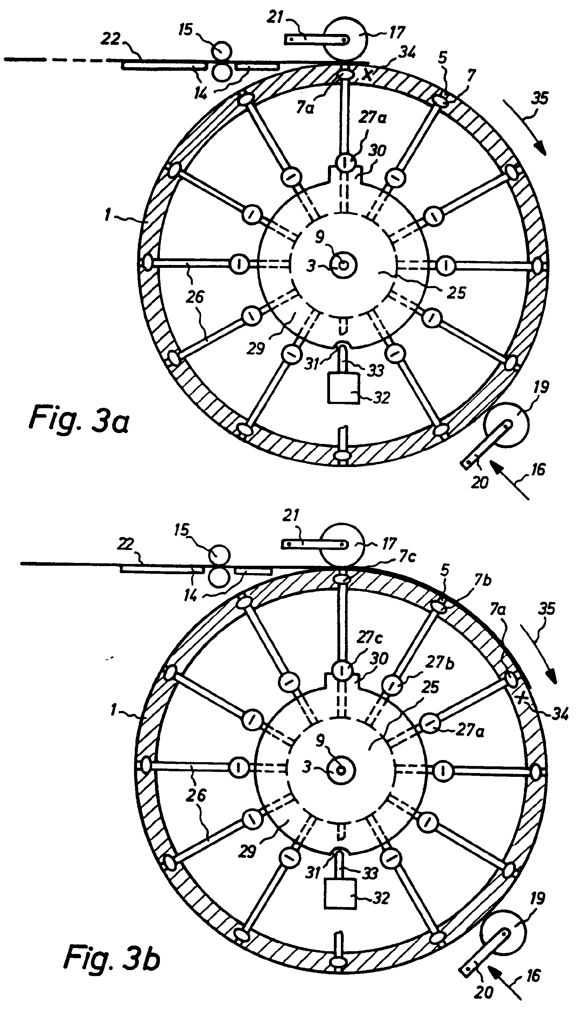

Die Betriebsweise der Aufspann-Vorrichtung und des Vakuum-Verteilers sollen anhand der Fig. 3a -3f näher erläutert werden.

Fig. 3a zeigt den Beginn des Aufspannvorganges für eine Filmfahne 22, bei dem sich die im Schnittbild dargestellte Aufzeichnungstrommel 1 in einer Aufspann-Startposition befindet.

Die Aufzeichnungstrommel 1 weist an ihrem Umfang eine Aufspannmarke 34 auf, welche diejenige Mantellinie der Aufzeichnungstrommel 1 markiert, auf der jeweils der Anfang einer aufzuspannenden Filmfahne 22 liegen soll. Diese Aufspannmarke 34 befindet sich in zweckmäßigerweise in der Nähe eines Saugkanals 7 bzw. einer Saugloch-Reihe 6, so daß jeweils der Anfangsbereich einer Filmfahne 22 über dieser Saugloch-Reihe liegt und angesaugt wird.

In der Aufspann-Startposition der Aufzeichnungstrommel 1 liegt die Aufspannmarke 34 im Bereich der Andruckrolle 17, in dem der Anfang der zur Aufzeichnungstrommel 1 transportierten Filmfahne 22 mit der Trommeloberfläche in Berührung kommt.

Die Aufzeichnungstrommel 1 wird durch den an die Trommeloberfläche angeschwenkten Positionierantrieb 16 in die Aufspann-Startposition gedreht, in der die Aufzeichnungstrommel 1 zunächst durch Abschalten des Positionierantriebes 16 verharrt.

Die Steuerscheibe 29 wird durch den Arretierstift 33 in der Position zur Aufspann-Startposition der Aufzeichnungstrommel 1 blockiert, in der der Steuerfinger 30 das Ventil 27a öffnet, wodurch nur der im Bereich der Aufspannmarke 34 liegende Saugkanal 7a beim Anschalten der Vakuum-Pumpe 13 mit Vakuum beaufschlagt wird.

Die aufzuspannende Filmfahne 22 vorgegebener Formatlänge wird mittels des Transport-Rollenpaares 15 über die Film-Transportfläche 14 zur Aufzeichnungstrommel 1 transportiert bis der Anfang der Filmfahne 22 an der Aufspannmarke 34 liegt. Dann wird der Anfangsbereich der Filmfahne 22 durch Absenken der Andruckrolle 17 an die zum Saugkanal 7a gehörende Saugloch-Reihe angedrückt und durch das sich nach Einschalten der Vakuum-Pumpe 13 in der Saugloch-Reihe aufbauende Vakuum auf der Trommeloberfläche fixiert.

Da zu diesem Zeitpunkt nur die zum Saugkanal 7a gehörende Saugloch-Reihe mit Vakuum beaufschlagt ist, wird das Vakuum dort mit seinem vollen Nennwert wirksam, wodurch in vorteilhafterweise ein Verrutschen des Anfangsbereiches der Filmfahne 22 aus seiner exakten Position in der Anfangsphase der Filmaufspannung vermieden wird.

Nach der Fixierung des Anfangsbereiches der Filmfahne 22 auf der ersten Saugloch-Reihe wird der Positionierantrieb 16 erneut eingeschaltet und die Aufzeichnungstrommel 1 aus der Aufspann-Startposition in Richtung eines Pfeiles 35 gedreht, wodurch die Filmfahne 22 von der Film-Transportfläche 14 gezogen und mit wachsender Umschlingung um die sich drehende Aufzeichnungstrommel 1 gelegt wird.

Fig. 3b zeigt den Aufspannvorgang in einem fortgeschrittenen Zustand, in dem durch drehende Aufzeichnungstrommel 1 in Richtung des Pfeiles 35 nacheinander auch die Ventile 27b und 27c an dem Steuerfinger 30 der blockierten Steuerscheibe 29 vorbeibewegt und damit geöffnet wurden, so daß entsprechend der momentanen Umschlingung der Filmfahne 22 um die Aufzeichnungstrommel 1 jetzt zusätzlich die zu den Saugkanälen 7b und 7c gehörenden Saugloch-Reihen mit Vakuum beaufschlagt sind.

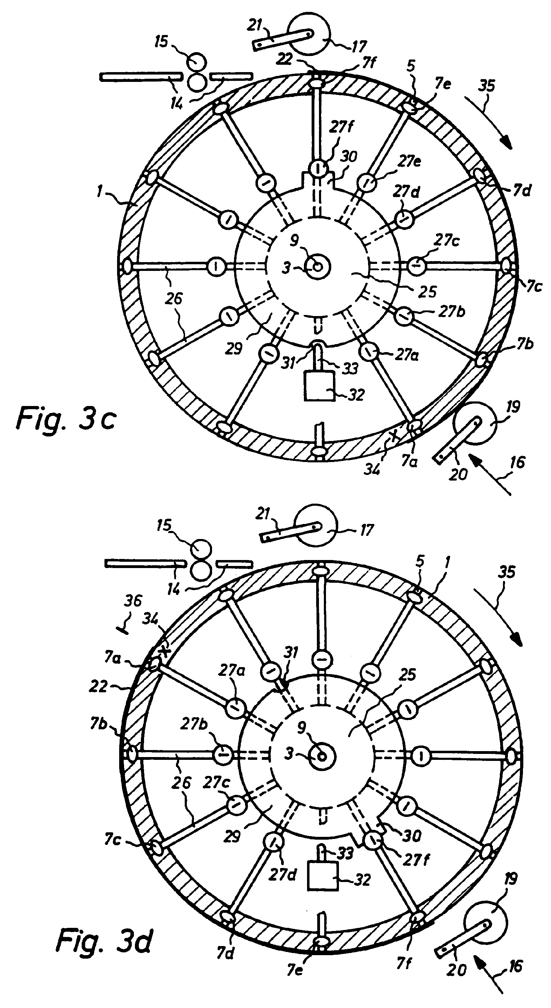

Fig. 3c zeigt den Aufspannvorgang zu dem Zeitpunkt, zu dem die Filmfahne 22 durch Drehen der Aufzeichnungstrommel 1 in Richtung des Pfeiles 35 und durch schrittweise Zuschaltung der zu den Saugkanälen 7a bis 7f gehörigen Saugloch-Reihen bereits ganz aufgespannt ist.

Durch die schrittweise Zuschaltung der Saugloch-Reihen 7 wird das Aufspannverhalten wesentlich verbessert. Da der volle Vakuumwert nur an der jeweils zugeschalteten Saugloch-Reihe wirksam ist, an der sich Filmfahne und Trommeloberfläche momentan berühren, und das freie Ende der Filmfahne 22 noch nicht angesaugt wird, kann es sich beim Aufspannen frei zentrieren, wodurch in vorteilhafterweise ein genaues und faltenfreies Aufspannen insbesondere langer Filmfahnen gewährleistet ist. Das Aufspannverhalten kann noch weiter verbessert werden, indem während des Aufspannvorganges der Vakuumnennwert durch Einschalten des Nebenluft-Ventils 12 abgesenkt wird.

Nachdem die Filmfahne 22 vollständig aufgespannt ist, wird die Andruckrolle 17 von der Trommeloberfläche abgehoben und der Arretierstift 33 durch das Stellorgan 32 aus der Nut 31 der Steuerscheibe 29 herausgezogen, wodurch die Blockierung der Steuerscheibe 29 aufgehoben wird. Bei Weiterdrehen der Aufzeichnungstrommel 1 dreht sich die Steuerscheibe 29 jetzt mit der Aufzeichnungstrommel 1 mit und zwar in der bei Freigabe der Steuerscheibe 29 eingenommenen relativen Position zur Aufzeichnungstrommel 1. Dadurch findet keine Relativbewegung mehr zwischen den Ventilen 27 und dem Steuerfinger 31 der Steuerscheibe 29 statt, es werden keine weiteren Ventile 27 geöffnet und keine weiteren Saugloch-Reihen zugeschaltet.

Es werden somit jeweils nur soviele Saugloch-Reihen mit Vakuum beaufschlagt, wie umfangsmäßig von der momentan aufgespannten Filmfahne auch tatsächlich bedeckt werden, wobei die übrigen Saugloch-Reihen abgeschaltet sind. Dadurch ist aufgrund der geringen Vakuumverluste stets eine sichere Fixierung der Filmfahnen unterschiedlicher Formate auf der Aufzeichnungstrommel, insbesondere in der Belichtungs-Phase, in der sich die Aufzeichnungstrommel mit hoher Geschwindigkeit dreht, gewährleistet.

Das Schaltsignal für das Stellorgan 32, mit dem die Blockierung der Steuerscheibe 29 bei vollständiger Aufspannung der Filmfahnen unterschiedlicher Formate aufgehoben wird, kann automatisch erzeugt werden.

Für diesen Fall ist beispielsweise ein Taktgeber mit der Aufzeichnungstrommel 1 gekoppelt, der bei Drehung der Aufzeichnungstrommel 1 eine Taktfolge erzeugt. Die von der Aufspann-Startposition der Aufzeichnungstrommel 1 an gezählten Takte sind ein Maß für den momentanen Drehwinkel der Aufzeichnungstrommel 1 und damit für die momentan aufgespannte Länge der Filmfahne 22. Die jeweilige Formatlänge der aufzuspannenden Filmfahne 22 wird als Anzahl von Takten vorgegeben. Die gezählten Takte des Taktgebers werden dann laufend mit der vorgegebenen Anzahl von Takten verglichen und bei Taktgleichheit das Schaltsignal für das Stellorgan 32 erzeugt.

Fig. 3d zeigt die Aufzeichnungstrommel 1 zu dem Zeitpunkt, zudem sie sich mittels des Positionierantriebs 16 bereits in die Belichtungs-Startposition gedreht hat und der Positionierantrieb 16 abgeschaltet ist. In der Belichtungs-Startposition ist die Anfangsmarke 34 auf der Aufzeichnungstrommel mit der optischen Achse 36 eines nicht dargestellten Aufzeichnungsorgans in Deckung.

Aus der Figur ist ersichtlich, daß durch das Drehen der Aufzeichnungstrommel 1 in die Belichtungs-Startposition keine weiteren Saugkanäle 7 zugeschaltet wurden, da der Steuerfinger 31 der Steuerscheibe 29 am Ventil 27f verbleibt.

Nach dem erläuterten Aufspannvorgang wird der Positionierantrieb 16 von der Aufzeichnungstrommel 1 abgeschwenkt, der in Fig. 1 gezeigte Hauptmotor 2 gestartet, die Filmfahne 22 punkt- und zeilenweise belichtet und die belichtete Filmfahne 22 wieder von der Aufzeichnungstrommel 1 abgespannt.

Das Abspannen der Filmfahne, das nicht näher beschrieben und dargestellt ist, kann beispielsweise automatisch erfolgen, indem ein an die Trommeloberfläche anschwenkbarer Abhebefinger unter den Anfang der Filmfahne 22 greift und diese durch Drehen der Aufzeichnungstrommel 1 mittels des Positionierantriebs 16 in Richtung des Pfeiles 35 von der Trommeloberfläche unter Vakuum abschält. Die abgeschälte Filmfahne kann dann in eine Nehmer-Film-Kassette oder über einen Transportkanal direkt in eine Entwicklungsstation transportiert werden.

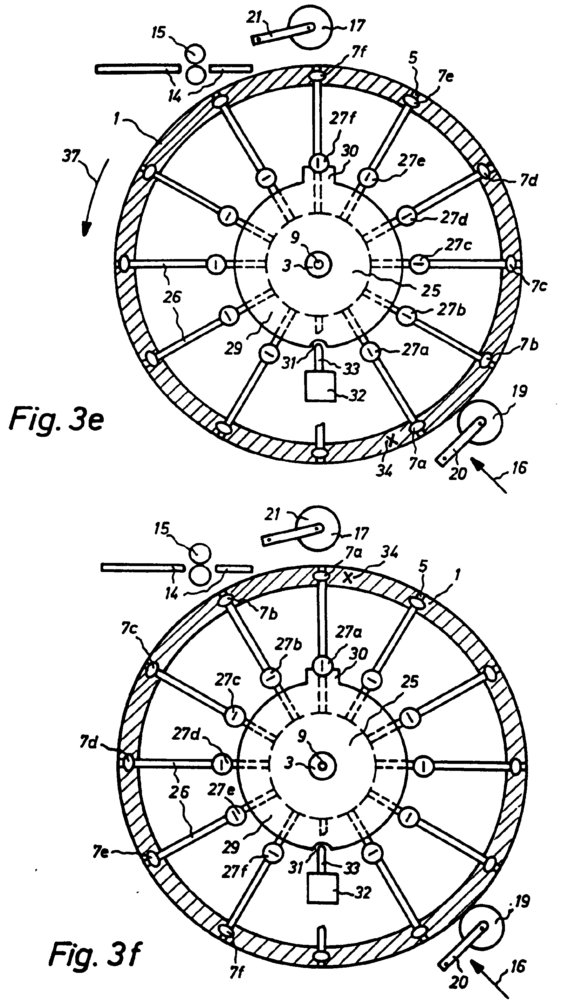

Fig.3e zeigt die Aufzeichnungstrommel 1 nach dem Abspannen der belichteten Filmfahne 22.

Die beim Abspannen zuvor geöffneten Ventile 27a bis 27f sind zu diesem Zeitpunkt noch geöffnet und müssen zur Vorbereitung eines neuen Aufspannvorganges geschlossen werden.

Dazu wird der Positionierantrieb 16 wieder an die Aufzeichnungstrommel 1 angeschwenkt und gestartet. Die Aufzeichnungstrommel 1 dreht sich zusammen mit der Steuerscheibe 29 in Richtung eines Pfeiles 37 in umgekehrter Richtung wie beim Aufspannvorgang. Durch ein Schaltsignal an das Stellorgan 32 wird der Arretierstift 33 in Richtung der Steuerscheibe 29 bewegt. Der Arretierstift 33 gleitet zunächst auf dem Rand der rotierenden Steuerscheibe 29 bis er in die Nut 31 fällt und die Steuerscheibe 29 blockiert.

Durch fortgesetztes Drehen der Aufzeichnungstrommel 1 in Richtung des Pfeiles 37 bewegen sich dann die Ventile 27f bis 27a nacheinander an dem Steuerfinger 31 der blockierten Steuerscheibe 29 vorbei und werden durch den Steuerfinger 31 geschlossen. Dieser Zustand ist in Fig.3f dargestellt.

Falls das Abspannen der belichteten Filmfahnen unter schrittweiser Vakuum-Abschaltung der einzelnen Saugloch-Reihen erfolgen soll, dreht sich die Aufzeichnungstrommel 1 in Richtung des Pfeiles 37, der Steuerfinger greift unter das Ende der belichteten Filmfahne und schält diese von der Aufzeichnungstrommel ab.

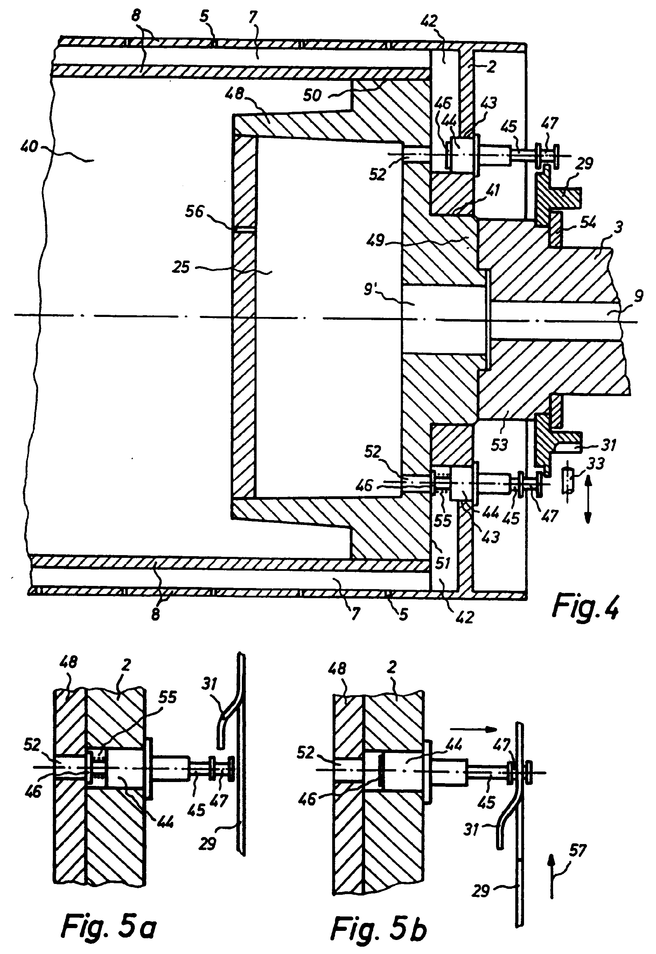

Fig.4 zeigt ein praktisches Ausführungsbeispiel für die Aufspann-Vorrichtung mit Vakuum-Verteiler in einem Längsschnitt durch die Hohlzylinder ausgebildete Aufzeichnungstrommel 1.

In der Wandung 8 des Hohlzylinders 40 sind zwei der Saugkanäle 7 sichtbar, die mit den Sauglöchern 5 verbunden sind. Die Stirnfläche des Hohlzylinders 40 ist durch den Deckel 2 verschlossen, der eine zentrische Öffnung 41 aufweist. Die Innenseite des Deckels 2 ist mit radial verlaufenden Nuten 42 versehen, welche mit den Saugkanälen 7 in Verbindung stehen. Die Außenseite des Deckels 2 weist Bohrungen 43 auf, die kreisförmig um die Trommelachse angeordnet sind und in den radial verlaufenden Nuten 42 münden. Die Bohrungen 43 nehmen die Grundkörper 44 der Ventile 27 auf. In dem Grundkörper 44 eines Ventils ist ein Stößel 45 bewegbar, der an einem Ende eine kreisförmige Dichtungsfläche 46 und an seinem anderen Ende eine Steuerrolle 47 trägt.

Im Hohlzylinder 40 befindet sich ein zylindrisches Gehäuseteil 48, dessen Ansatz 49 in die Öffnung 41 des Deckels 2 eingepaßt ist. Die Umfangsfläche 50 des Gehäuseteils 48 ist mit der Innenfläche des Hohlzylinders 40 und die Stirnseite 51 des Gehäuseteils 48 mit der Innenfläche des Deckels 2 luftdicht verbunden. Die durch die Stirnseite 51 des Gehäuseteils 48 luftdicht abgedeckten Nuten 42 in dem Deckel 2 bilden die Verteilerleitungen 26. An dem Ansatz 49 des Gehäuseteils 48 ist der Wellenzapfen 3 befestigt. Der Innenraum des Gehäuseteils 48 bildet die Vakuumkammer 25, die über eine Saugbohrung 9 im Gehäuseteil 48 an die Saugbohrung 9 im Wellenzapfen 3 angeschlossen ist. Das Gehäuseteil 48 weist an seiner Stirnseite 51 kreisförmig um die Trommelachse angeordnete Bohrungen 52 auf, die den Ventilen 27 gegenüberliegen und durch die Dichtungsflächen 46 der Ventile 27 verschließbar sind.
Auf dem Ansatz 53 des Wellenzapfens 3 ist die Steuerscheibe 29 mittels einer Scheibe 54 in einer Gleitfassung gelagert. An der Steuerscheibe 29 ist die Nut 31 sichtbar, in die der Arretierstift 33 eingeführt werden kann.

In der Fig. 4 ist das obere Ventil 27 durch den Steuerfinger 31 der Steuerscheibe 29 geöffnet, indem die Dichtungsfläche 46 die zugehörige Bohrung 52 freigibt, wodurch über die Bohrung 52 und die Verteilerleitung 26 eine Verbindung zwischen der Vakuumkammer 25 und dem oberen Saugkanal 7 hergestellt ist. Das untere Ventil 27 ist dagegen geschlossen, indem die Dichtungsfläche 46 des Ventils 27 mittels einer Feder 55 gegen die zugehörige Bohrung 52 gedrückt wird, wodurch die Verbindung zwischen Vakuumkammer 25 und unterem Saugkanal 7 unterbrochen ist. Durch die Feder 55 hat das Ventil 27 eine stabile Arbeitsstellung im geschlossenem Zustand. Die Steuerung der Ventile 27 durch die Steuerscheibe 29 wird anhand der Fig. 5 noch näher erläutert.

Das Gehäuseteil 48 kann zusätzlich eine Drosselung 56 aufweisen, welche die Vakuumkammer 25 mit dem Trommelinnenraum verbindet.

Durch die Drosselbohrung 56 baut sich beim Evakuieren der Vakuumkammer 25 auch im Trommelinnenraum allmählich ein Vakuum auf, das als Vakuumspeicher dient. Der Vakuumspeicher bewirkt, daß sich das Vakuum an den Sauglöchern 5 beim Abschalten der Vakuum-Pumpe nur langsam abbaut.

Fig. 5 verdeutlicht die Steuerung der Ventile 27 durch die Steuerscheibe 29. Der bisher nur schematisch angedeutete Steuerfinger 31 der Steuerscheibe 29 ist als "Weiche" für die Steuerrolle 47 des Ventils 27 ausgebildet.

In Fig. 5a hat die Steuerrolle 47 des Ventils 27 noch nicht den Steuerfinger 31 der Steuerscheibe 29 erreicht. Das Ventil 27 verharrt in der stabilen Arbeitsstellung "geschlossen", in der die Dichtungsfläche 46 die Bohrung 52 abdichtet.

In Fig. 5b wurde die Steuerrolle 47 des Ventils 27 durch eine Bewegung des Ventils 27 in Richtung eines Pfeiles 57 von dem Steuerfinger 31 der Steuerscheibe 29 erfaßt und auf die Steuerscheibe 29 geleitet, wodurch der Stößel 45 des Ventils 27 eine Hubbewegung ausführt. Durch diese Hubbewegung des Stößels 44 nimmt das Ventil 27 jetzt die Arbeitsstellung "geöffnet" ein, in der die Dichtungsfläche 46 die Bohrung 52 freigibt.

Dadurch, daß die Steuerrolle 46 jetzt auf der Steuerscheibe 29 abrollt, wird das Ventil 27 in Arbeitsstellung "geöffnet" fixiert. Durch eine Relativbewegung in entgegengesetzter Richtung kann die Steuerrolle 47 des Ventils 27 über den Steuerfinger 31 in die stabile Arbeitsstellung "geschlossen" geführt werden.

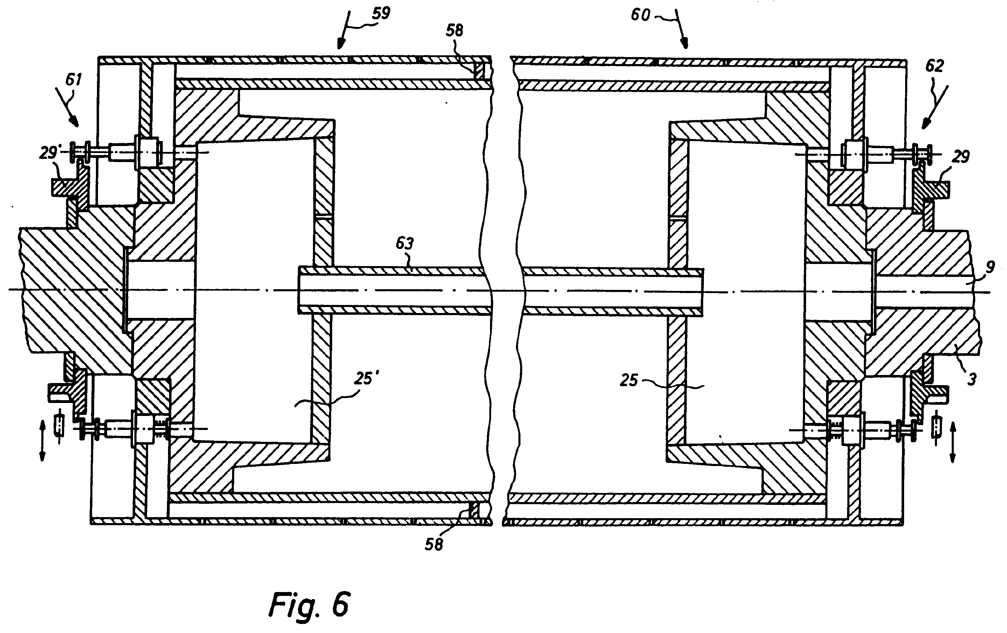

Fig. 6 zeigt eine weiteres Ausführungsbeispiel für die Aufspann-Vorrichtung, in dem die Aufzeichnungstrommel 1 durch Schotte 58 in den Saugkanälen 7 in zwei axial nebeneinanderliegende Vakuumbereiche 59 und 60 unterteilt ist, die getrennt mit Vakuum beaufschlagbar sind.

Beide Vakuumbereiche 59 und 60 sind durch getrennte Vakuum-Verteiler 61 und 62 steuerbar. Die Vakuumkammer 25 des Vakuum-Verteilers 62 ist, wie in Fig. 5 dargestellt und beschrieben, über die Saugbohrung 9 im Wellenzapfen 3 mit der Vakuum-Pumpe 13 verbunden. Dagegen wird die Vakuumkammer 25′ des Vakuum-Verteilers 61 über eine Rohrleitung 63 von der Vakuumkammer 25 des Vakuum-Verteilers 62 mit Vakuum versorgt.

Beide Vakuumbereiche 59 und 60 sind durch die Steuerscheiben 29 und 29′ getrennt steuerbar, wodurch die Vakuumverluste auch bei unterschiedlichen Formatbreiten der aufzuspannenden Filmfahnen in vorteilhafter Weise geringgehalten werden können.

Wenn eine Filmfahne mit einer geringeren Formatbreite als die Breite eines Vakuumbereiches aufzuspannen ist, wird nur eine der Vakuumbereiche aktiviert. Der andere Vakuumbereich bleibt dann abgeschaltet, indem die Steuerscheibe des betreffenden Vakuumbereiches bei dem Aufspannvorgang nicht blockiert wird, wodurch keine Ventile geöffnet werden.

Wenn zwei Filmfahnen geringer Formatbreite aber gleicher Formatlänge oder eine Filmfahne aufzuspannen ist, deren Formatbreite größer als die Breite eines Vakuumbereiches ist, werden beide Vakuumbereiche aktiviert und die automatische Zuschaltung der Saugloch-Reihen synchron gesteuert.

Falls zwei Filmfahnen geringer Formatbreite aber mit unterschiedlichen Formatlängen aufzuspannen sind, kann die Zuschaltung der Saugloch-Reihen entsprechend der jeweiligen Formatlänge in den beiden Vakuumbereichen in vorteilhafter Weise getrennt gesteuert werden.

## Patentansprüche

1. Vorrichtung zum Aufspannen von blattförmigem Aufzeichnungsmaterial auf die Aufzeichnungstrommel eines Reproduktionsgerätes, bestehend aus:
- Sauglöchern (5) in der Mantelfläche der Aufzeichnungstrommel (1), welche in im wesentlichen axial zur Trommelachse verlaufenden Saugloch-Reihen (6) angeordnet sind,
- im wesentlichen axial zur Trommelachse verlaufenden Saugkanälen (7) in der Aufzeichnungstrommel (1), von denen jeder die Sauglöcher (5) einer Saugloch-Reihe (6) miteinander verbindet,
- einer Vakuumkammer (25) in der Aufzeichnungstrommel (1), welche mit einer ortsfesten Vakuumpumpe (13) in Verbindung steht,
- Verteilerleitungen (26) zwischen der Vakuumkammer (25) und den einzelnen Saugkanälen (7),
- steuerbaren Ventilen (27) in den Verteilerleitungen (26) zum selektiven Verbinden und Trennen der einzelnen Saugkanäle (7) von der Vakuumkammer (25) und
- einer im Bereich der Aufzeichnungstrommel (1) angeordneten und von der Drehbewegung der Aufzeichnungstrommel gesteuerten Steuervorrichtung (29; 30; 31; 32;33) zum automatischen, aufeinanderfolgenden Öffnen und/oder Schließen der Ventile (27) beim Auf- und/oder Abspannen des Aufzeichnungsmaterials (22), wobei die Ventile (27) durch die Steuereinrichtung (29; 30; 31; 32; 33) beim Aufspannen derart automatisch gesteuert werden, daß zunächst die im Anfangsbereich des Aufzeichnungsmaterials (22) liegende Saugloch-Reihe (6) und dann nacheinander weitere Saugloch-Reihen (6) mit wachsender Umschlingung des Aufzeichnungsmaterials (22) um die Auzeichnungstrommel (1) mit der Vakuumkammer (25) verbunden und mit Vakuum beaufschlagt werden und daß die Zuschaltung weiterer Saugloch-Reihen (6) entsprechend der jeweiligen Umfangslänge des Aufzeichnungsmaterials (22) bei der im Endbereich des Aufzeichnungsmaterials (22) liegenden Saugloch-Reihe (7) unterbrochen wird.

2. Vorrichtung nach Anspruch 1, dadurch gekennzeichnet, daß die Steuervorrichtung (29;30;31;32;33) für die Ventile (27) aus folgenden Komponenten besteht:
- einer auf einem Wellenzapfen (3) der Aufzeichnungstrommel (1) gelagerten Steuerscheibe (29) mit einem Steuerfinger (30) als Betätigungsglied zum Öffnen und Schiießen der kreisförmig um die Steuerscheibe (29) angeordneten Ventile (27),
- einer Arretiervorrichtung (31;32;33) zum Blockieren der Steuerscheibe (29) in einer vorgegebenen ortsfesten Position zur Aufzeichnungstrommel (1), wobei die Steuerscheibe (29) auf dem Wellenzapfen (3) derart durch eine Gleitpassung gelagert ist, daß die durch die Arretiervorrichtung (31;32;33) nicht blockierte Steuerscheibe (29) von dem Wellenzapfen (3) der sich drehenden Aufzeichnungstrommel (1) ohne Schlupf mitgenommen wird.

3. Vorrichtung nach Anspruch 2, dadurch gekennzeichnet, daß die Arretiervorrichtung (31 ;32;33) aus einem durch ein ortsfestes Stellorgan (32) verstellbaren Arretierstift (33) besteht, der in eine an der Steuerscheibe (29) befindliche Nut (31) eingreift.

4. Vorrichtung nach einem der Ansprüche 1 bis 3, dadurch gekennzeichnet, daß die Ventile (27) jeweils durch Betätigen einer an einem Stößel (45) befestigten Steuerrolle (47) durch den Steuerfinger (30) der Steuerscheibe (29) in die Arbeitsstellung "geöffnet" steuerbar sind, wobei die Ventile (27) ohne Betätigung der Steuerrollen (47) durch den Steuerfinger (30) ihre stabile Arbeitsstellung "geschlossen" einnehmen.

5. Vorrichtung nach einem der Ansprüche 1 bis 4, dadurch gekennzeichnet, daß Ventile (27) mit zwei stabilen Arbeitsstellungen verwendet werden.

6. Vorrichtung nach einem der Ansprüche 1 bis 5, dadurch gekennzeichnet, daß
- die Aufzeichnungstrommel (1) als Hohlzylinder (40) ausgebildet ist, in dessen Wandung (8) die Saugkanäle (7) verlaufen und dessen Stirnseiten durch scheibenförmige Deckel (2) verschlossen sind, von denen mindestens einer eine zentrale Öffnung (41) hat,
- die in das Trommelinnere weisende Innenfläche des Deckels (2) im wesentlichen radial verlaufende Nuten (42) aufweist,
- die Außenfläche des Deckels (2) mit kreisförmig um die Trommelachse angeordneten Bohrungen (43) versehen ist, die in den Nuten (42) münden, und in denen die Ventile (27) angebracht sind,
- ein zylinderförmiges Gehäuseteil (48) an der Innenfläche des Deckels (2) und mit seinem Ansatz (49) in der zentralen Öffnung (41) des Deckels (2) befestigt ist, wobei die durch das Gehäuseteil (48) luftdicht abgedeckten Nuten (42) im Deckel (2) die mit den Saugkanälen (7) verbundenen Verteilerleitungen (26) bilden,
- an dem durch die Öffnung (41) des Deckels (2) ragenden Ansatz (49) des Gehäuseteils (48) der Wellenzapfen (3) befestigt ist, der die Saugbohrung (9) aufweist,
- der Innenraum des Gehäuseteils (48) die Vakuumkammer (25) bildet, die über eine Bohrung (9') im Gehäuseteil (48) mit der Saugbohrung (9) im Wellenzapfen (3) in Verbindung steht,
- die zum Deckel (2) gerichtete Stirnfläche (51) des Gehäuseteils (48) kreisförmig angeordnete Bohrungen (52) aufweist, welche die Vakuumkammer (25) mit den Nuten (42) verbinden und welche so angeordnet sind, daß sie durch die Ventile (27) verschließbar sind, und
- die Steuerscheibe (29) mittels einer Scheibe (54) an dem Ansatz (53) des Wellenzapfens (3) gelagert ist.

7. Vorrichtung nach einem der Ansprüche 1 bis 6, dadurch gekennzeichnet, daß
- die Saugkanäle (7) in der Aufzeichnungstrommel (1) Trennwände (58) aufweisen, wodurch die Aufzeichnungstrommel (1) in zwei getrennte VakuumBereiche (59;60) unterteilt ist, und
- jedem Vakuum-Bereich (59;60) ein separat steuerbarer Vakuum-Verteiler (61;62) zugeordnet ist.

8. Vorrichtung nach Anspruch 7, dadurch gekennzeichnet, daß die Vakuumkammer (25') des einen Vakuum-Verteilers (61) über ein im Trommelinnenraum axial verlaufendes Rohr (63) mit der Vakuumkammer (25) des anderen Vakuum-Verteilers (62) verbunden ist.

9. Vorrichtung nach einem der Ansprüche 1 bis 8, dadurch gekennzeichnet, daß die Vakuumkammer (25) eine Drosselbohrung (56) aufweist.

10. Vorrichtung nach einem der Ansprüche 1 bis 9, gekennzeichnet durch
- eine im Bereich der Aufzeichnungstrommel (1) im wesentlichen tangential zu dieser verlaufenden Transportfläche (14) für das Aufzeichnungsmaterial (22),
- Tranport-Mittel (15) zum Transport des Aufzeichnungsmaterials (22) zur Aufzeichnungstrommel (1),
- eine Andruckrolle (17), die in demjenigen Bereich an die Aufzeichnungstrommel (1) verschwenkbar ist, in dem der Anfang des über die Transportfläche (14) zur Aufzeichnungstrommel (1) transportierten Aufzeichnungsmaterials (22) mit der Trommeloberfläche in Berührung kommt,
- einen während des Aufspannens an die Aufzeichnungstrommel (1) anschwenkbaren Positionierantrieb (16) zum Drehen der Aufzeichnungstrommel (1), und
- einen mit der Aufzeichnungstrommel (1) gekoppelten Motor (23) zum Drehen der Aufzeichnungstrommel (1) beim punkt- und zeilenweisen Belichten des Aufzeichnungsmaterials (22).

11. Vorrichtung nach Anspruch 10, dadurch gekennzeichnet, daß die Transport-Mittel (15) aus unter- und oberhalb der Transportfläche (14) angeordneten Transportrollen bestehen, von denen mindestens eine antreibbar ist.

12. Vorrichtung nach einem der Ansprüche 1 bis 11, dadurch gekennzeichnet, daß zur Reduzierung des Vakuums während des Aufspannens des Aufzeichnungsmaterials (22) zwischen Vakuumkammer (25) und Vakuum-Pumpe (13) ein ein - und ausschaltbares Nebenluft-Ventil (12) geschaltet ist.

13. Vorrichtung nach einem der Ansprüche 1 bis 12, dadurch gekennzeichnet, daß die Abstände der Saugloch-Reihen (6) auf der Aufzeichnungstrommel (1) an die Umfangslängen der gängigen Formate für das aufzuspannende Aufzeichnungsmaterial (22) angepaßt sind.

14. Vorrichtung nach einem der Ansprüche 1 bis 13, dadurch gekennzeichnet, daß die Aufzeichnungstrommel (1) eine Aufspannmarke (34) aufweist, welche diejenige Saugloch-Reihe (6) kennzeichnet, auf der jeweils der Anfangsbereich des aufzuspannenden Aufzeichnungsmaterials (22) fixiert wird.

15. Verfahren zum Aufspannen von blattförmigem Aufzeichnungsmaterial auf die Aufzeichnungstrommel eines Reproduktionsgerätes zur punkt- und zeilenweisen Belichtung des Aufzeichnungsmaterials durch ein Aufzeichnungsorgan, bei der die Mantelfläche der Aufzeichnungstrommel im wesentlichen axial verlaufende Saugloch-Reihen aufweist, die mit einer Vakuum-Pumpe verbunden werden, um das Aufzeichnungsmaterial durch Vakuumansaugung auf der Aufzeichnungstrommel zu fixieren, dadurch gekennzeichnet, daß
- die Aufzeichnungstrommel (1) mittels des an die Trommeloberfläche angeschwenkten Positionierantriebes (16) in eine Aufspann-Startposition gedreht wird, in der die Aufspannmarke (34) auf der Aufzeichnungstrommel (1) etwa unter der Andruckrolle (17) liegt, wobei die Aufspannmarke (34) diejenige Saugloch-Reihe markiert, auf der der Anfangsbereich des aufzuspannenden Aufzeichnungsmaterials (22) liegen soll,
- die Transport-Mittel (15) gestartet werden und das Aufzeichnungsmaterial (22) über die Transportfläche (14) zur Aufzeichnungstrommel (1) transportiert wird bis der Anfangsbereich des Aufzeichnungsmaterials (22) auf der durch die Aufspannmarke (34) markierten ersten Saugloch- Reihe liegt,
- die Andruckrolle (17) auf die Aufzeichnungstrommel (1) abgesenkt wird,
- die Vakuum-Pumpe (13) eingeschaltet, die erste Saugloch-Reihe durch Öffnen des zugehörigen Ventils (27) mit Vakuum beaufschlagt und der Anfangsbereich des Aufzeichnungsmaterials (22) angesaugt wird,
- der Positonierantrieb (16) erneut gestartet wird und durch Öffnen weiterer Ventile (27) nacheinander weitere Saugloch-Reihen entsprechend der wachsenden Umschlingung der sich drehenden Aufzeichnungstrommel (1) durch das Aufzeichnungsmaterial (22) zuschaltet und mit Vakuum beaufschlagt werden,
- die Zuschaltung weiterer Saugloch-Reihen entsprechend der jeweiligen Umfangslänge des Aufzeichnungsmaterials (22) an derjenigen Saugloch-Reihe beendet wird, auf der der Endbereich des Aufzeichnungsmaterials (22) liegt,
- der Positionierantrieb (16) gestoppt und abgeschwenkt wird, wenn sich die Aufzeichnungstrommel (1) in der Belichtungs-Startposition befindet, in der die Aufspannmarke (34) in der optischen Achse des Aufzeichnungsorgans liegt,die Andruckrolle (17) abgehoben und der Motor (23) zur punkt- und zeilenweisen Belichtung des Aufzeichnungsmaterials (22) gestartet wird,
- nach der Belichtung der Motor (23) abgeschaltet, der Positionierantrieb (16) wieder an die Aufzeichnungstrommel (1) angeschwenkt und gestartet wird,
- das belichtete Aufzeichnungsmaterial (22) von der Aufzeichnungstrommel (1) abgespannt und die Vakuum-Pumpe (13) abgeschaltet wird,
- die beim Aufspannen zugeschalteten Saugloch-Reihen durch Schließen der Ventile (27) abgeschaltet werden, und
- die Aufzeichnungstrommel (1) durch den Positionierantrieb (16) wieder in die Aufspann-Startposition gedreht wird.

16. Verfahren nach Anspruch 15, dadurch gekennzeichnet, daß die Steuerscheibe (29) in der Aufspann-Startposition der Aufzeichnungstrommel (1) durch die Arretiervorrichtung (31;32;33) in derjenigen Stellung blockiert Steuerscheibe (29) das Ventil (27) öffnet, das der durch die Aufspannmarke (34) markierten ersten Saugloch-Reihe zugeordnet ist.

17. Verfahren nach Anspruch 15 oder 16, dadurch gekennzeichnet, daß die Steuerscheibe (29) beim Aufspannen des Aufzeichnungsmaterials (22) blockiert ist, wodurch die den einzelnen Saugloch-Reihen zugeordneten Ventile (27) durch die sich drehende Aufzeichnungstrommel (1) an dem Steuerfinger (30) der Steuerscheibe (29) vorbeibewegt und geöffnet werden.

18. Verfahren nach einem der Ansprüche 15 bis 17, dadurch gekennzeichnet, daß die Blockierung der Steuerscheibe (29) dann aufgehoben wird, wenn der Steuerfinger (30) der Steuerscheibe (29) das derjenigen Saugloch-Reihe zugeordnete Ventil (27) geöffnet hat, auf der sich der Endbereich des Aufzeichnungsmaterials (22) befindet.

19. Verfahren nach einem der Ansprüche 15 bis 18, dadurch gekennzeichnet, daß zum Schließen der Ventile (27) die Steuerscheibe (29) wieder blockiert wird und die Ventile (27) an dem Steuerfinger ( 30) der blockierten Steuerscheibe (29) durch Drehen der Aufzeichnungstrommel (1) in der zur Aufspannrichtung entgegengesetzten Richtung vorbeibewegt werden.

20. Verfahren nach einem der Ansprüche 15 bis 19, dadurch gekennzeichnet, daß der für die Belichtungs-Phase vorgesehene Nennwert des Vakuums durch Öffnung des Nebenluft-Ventils (12) für die Dauer des Aufspannens abgesenkt wird, wodurch das Aufzeichnungsmaterial (22) mit vermindertem Unterdruck angesaugt wird.

## Claims

1. A device for the clamping of recording material in sheet form onto the recording drum of a reproduction apparatus, consisting of:
- suction holes (5) in the covering surface of the recording drum (1), which are arranged in suction hole rows (6) running substantially axially to the drum axis,
- suction canals (7) in the recording drum (1), running Substantially axially to the drum axis, each of which canals connects the suction holes (5) of a suction hole row (6) with each other,
- a vacuum chamber (25) in the recording drum (1), which is connected with a fixed vacuum pump (13),
- distributor ducts (26) between the vacuum chamber (25) and the individual suction canals (7),
- controllable valves (27) in the distributor ducts (26) for the selective connection and separation of the individual suction canals (7) from the vacuum chamber (25)
and
- a control device (29;30;31;32;33) arranged in the region of the recording drum (1) and controlled by the rotational movement of the recording drum, for the automatic successive opening and/or closing of the valves (27) when the recording material (22) is clamped and/or released, wherein the valves (27), on clamping, are automatically controlled by the control device (29;30;31;32;33) such that firstly the suction hole row (6) lying in the start region of the recording material (22) and then successively further suction hole rows (6) with increasing looping of the recording material (22) around the recording drum (1) are connected with the vacuum chamber (25) and are acted upon with vacuum and that the connecting of further suction hole rows (6) is interrupted in accordance with the respective circumferential length of the recording material (22) at the suction row (7) lying in the end region of the recording material (22).

2. A device according to Claim 1, characterised in that the control device (29;30;31;32;33) for the valves (27) consists of the following components:
- a control disc (29) mounted on a shaft journal (3) of the recording drum (1) with a control finger (30) as actuating member to open and close the valves (27) which are arranged in a circular shape around the control disc (29),
- an arresting device (31;32;33) to lock the control disc (29) in a given fixed position to the recording drum (1), wherein the control disc (29) is mounted on the shaft journal (3) by a sliding fit such that the control disc (29) when not locked by the arresting device (31;32;33) is entrained without slippage by the shaft journal (3) of the rotating recording drum (1).

3. A device according to Claim 2, characterised in that the arresting device (31;32;33) consists of an arresting pin (33) which is adjustable by a fixed adjusting member (32) and which engages into a groove (31) situated on the control disc (29).

4. A device according to one of Claims 1 to 3, characterised in that the valves (27) are able to be controlled in each case by actuation of a control roller (47), secured to a plunger (45), by the control finger (30) of the control disc (29) into the "open" operating position, wherein the valves (27) without actuation of the control rollers (47) by the control finger (30) assume their stable "closed" operating position.

5. A device according to one of Claims 1 to 4, characterised in that valves (27) are used with two stable operating positions.

6. A device according to one of Claims 1 to 5, characterised in that
- the recording drum (1) is constructed as a hollow cylinder (40), in the wall (8) of which the suction canals (7) run and the end faces of which are closed by disc-shaped covers (2), at least one of which has a central opening (41),
- the inner surface of the cover (2) pointing into the interior of the drum has grooves (42) running substantially radially,
- the outer surface of the cover (2) is provided with bores (43) arranged in a circular shape around the drum axis, which bores (43) open out in the grooves (42), and in which the valves (27) are arranged,
- a cylindrical housing part (48) is secured on the inner surface of the cover (2) and with its projection (49) in the central opening (41) of the cover (2), wherein the grooves (42) in the cover (2), which are covered in an air-tight manner by the housing part (48), form the distributor ducts (26) which are connected with the suction canals (7), on the projection (49) of the housing part (48), projecting through the opening (41) of the cover (2), the shaft journal (3) is secured, which has the suction bore (9),
- the interior of the housing part (48) forms the vacuum chamber (25), which is connected via a bore (9′) in the housing part (48) with the suction bore (9) in the shaft journal (3),
- the end face (51) of the housing part (48), directed towards the cover (2), has bores (52) arranged in a circular shape, which connect the vacuum chamber (25) with the grooves (42) and which are arranged so that they are able to be closed by the valves (27), and
- the control disc (29) is mounted by means of a disc (54) on the projection (53) of the shaft journal (3).

7. A device according to one of Claims 1 to 6, characterised in that
- the suction canals (7) in the recording drum (1) have dividing walls (58), whereby the recording drum (1) is divided into two separate vacuum zones (59;60), and
- a separately controllable vacuum distributor (61;62) is associated with each vacuum zone (59;60).

8. A device according to Claim 7, characterised in that the vacuum chamber (25′) of the one vacuum distributor (61) is connected via a pipe (63) running axially in the interior of the drum with the vacuum chamber (25) of the other vacuum distributor (62).

9. A device according to one of Claims 1 to 8, characterised in that the vacuum chamber (25) has a throttle bore (56).

10. A device according to one of Claims 1 to 9, characterised by
- a transport surface (14) for the recording material (22), running in the region of the recording drum (1) substantially tangentially to the latter,
- transport means (15) for transporting the recording material (22) to the recording drum (1),
- a pressure roller (17) which is able to be swivelled against the recording drum (1) in the region in which the start of the recording material (22) transported over the transport surface (14) to the recording drum (1) comes into contact with the drum surface,
- a positioning drive (16) able to be swivelled against the recording drum (1) during clamping, to rotate the recording drum (1), and
- a motor (23), coupled with the recording drum (1), to rotate the recording drum (1) on the exposure by dot and line of the recording material (22).

11. A device according to Claim 10, characterised in that the transport means (15) consist of transport rollers arranged beneath and above the transport surface (14), at least one of which transport rollers is able to be driven.

12. A device according to one of Claims 1 to 11, characterised in that to reduce the vacuum during the clamping of the recording material (22) a secondary air valve (12), which is able to be connected and disconnected, is arranged between the vacuum chamber (25) and vacuum pump (13).

13. A device according to one of Claims 1 to 12, characterised in that the intervals of the suction hole rows (6) on the recording drum (1) are adapted to the circumferential lengths of the current formats for the recording material (22) which is to be clamped.

14. A device according to one of Claims 1 to 13, characterised in that the recording drum (1) has a clamping mark (34), which designates the suction hole row (6) on which in each case the start region is clamped of the recording material (22) which is to be clamped.

15. A method for the clamping of recording material in sheet form onto the recording drum of a reproduction apparatus for the exposure of the recording material by dot and line by a recording member, in which the covering surface of the recording drum has suction hole rows running substantially axially, which are connected with a vacuum pump, in order to fix the recording material by vacuum suction on the recording drum, characterised in that
- the recording drum (1) is rotated into a clamping start position by means of the positioning drive (16) which is swivelled against the drum surface, in which position the clamping mark (34) on the recording drum (1) lies approximately under the pressure roller (17), wherein the clamping mark (34) marks the suction hole row on which the start region of the recording material (22) which is to be clamped, is to lie,
- the transport means (15) are started and the recording material (22) is transported over the transport surface (14) to the recording drum (1) until the start region of the recording material (22) lies on the first suction hole row marked by the clamping mark (34),
- the pressure roller (17) is lowered onto the recording drum (1),
- the vacuum pump (13) is switched on, the first suction hole row is acted upon by vacuum by opening of the associated valve (27), and the start region of the recording material (22) is sucked on,
- the positioning drive (16) is started again and by opening further valves (27) in succession, further suction hole rows are connected and acted upon by vacuum in accordance with the increasing looping of the rotating recording drum (1) by the recording material (22),
- the connection of further suction hole rows in accordance with the respective circumferential length of the recording material (22) is ended at the suction hole row on which the end region of the recording material (22) lies,
- the positioning drive (16) is stopped and swivelled off when the recording drum (1) is situated in the exposure start position in which the clamping mark (34) lies in the optical axis of the recording member, the pressure roller (17) is raised and the motor (23) is started for the exposure by dot and line of the recording material (22),
- after exposure, the motor (23) is switched off, the positioning drive (16) is swivelled against the recording drum (1) again and is started,
- the exposed recording material (22) is released from the recording drum (1) and the vacuum pump (13) is switched off,
- the suction hole rows connected during clamping are disconnected by closing the valves (27), and
- the recording drum (1) is rotated into the clamping start position again by the positioning drive (16).

16. A method according to Claim 15, characterised in that the control disc (29) locked in the clamping start position of the recording drum (1) by the arresting device (31;32;33) in that position, opens the valve (27), which is associated with the first suction hole row marked by the clamping mark (34).

17. A method according to Claim 15 or 16, characterised in that the control disc (29) is locked on clamping the recording material (22), whereby the valves (27) associated with the individual suction hole rows are moved past the control finger (30) of the control disc (29) by the rotating recording drum (1) and are opened.

18. A method according to one of Claims 15 to 17, characterised in that the locking of the control disc (29) is then discontinued when the control finger (30) of the control disc (29) has opened the valve (27) associated with the suction hole row on which the end region of the recording material (22) is situated.

19. A method according to one of Claims 15 to 18, characterised in that to close the valves (27), the control disc (29) is locked again and the valves (27) are moved past the control finger (30) of the locked control disc (29) by rotation of the recording drum (1) in the opposite direction to the clamping direction.

20. A method according to one of Claims 15 to 19, characterised in that the nominal value of the vacuum provided for the exposure phase is lowered by opening of the secondary air valve (12) for the duration of the clamping, whereby the recording material (22) is sucked on with reduced underpressure.

## Revendications

1. Dispositif pour brider un matériau d'enregistrement composé de feuille sur le tambour d'enregistrement d'un appareil de reproduction constitué de :
- trous d'aspiration (5) dans la surface d'enveloppe du tambour d'enregistrement (1) qui sont disposés essentiellement en séries de trous d'aspiration (6) s'étendant axialement par rapport à l'axe du tambour,
- canaux d'aspiration (7) s'étendant essentiellement axialement par rapport à l'axe du tambour dans le tambour d'enregistrement (1), chacun étant connecté à un trou d'aspiration (5) d'une série de trous d'aspiration (6),
- une chambre à vide (25) dans le tambour d'enregistrement (1) qui est en communication avec une pompe à vide (13) fixe,
- des conduites de répartition (26) entre la chambre à vide (25) et chaque canal d'aspiration (7),
- des vannes (27) pilotées dans les conduites de répartition (26) pour relier sélectivement ou isoler chaque canal d'aspiration (7) de la chambre à vide (25), et
- un dispositif de commande disposé dans le domaine du tambour d'enregistrement (1), et commandant la rotation du tambour d'enregistrement (29 ; 30 ; 31 ; 32 ; 33) pour ouvrir et fermer successivement automatiquement les vannes (27) pour tendre et/ou libérer le matériau d'enregistrement (22), les vannes (27) sont commandées automatiquement par le dispositif de commande (29 ; 30 ; 31 ; 32 ; 33) lors de la tension de sorte que d'abord la rangée de trous d'aspiration (6) située au début du matériau d'enregistrement (22), puis les autres rangées de trous d'aspiration (6) sont reliées à la chambre à vide (25) par l'enroulement grandissant du matériau d'enregistrement (22) autour du tambour d'enregistrement (1) et on met sous vide et on interrompt le branchement d'autres rangées de trous d'aspiration (6) en fonction de la longueur d'enroulement du matériau d'enregistrement (22) pour la rangée de trous d'aspiration (7) placée dans la partie terminale du matériau d'enregistrement (22).

2. Dispositif selon la revendication 1, caractérisé en ce que le dispositif de commande (29 ; 30 ; 31 ; 32 ; 33) des vannes (27) comprend les composants suivants :
- un disque de commande (29) logé sur un tourillon d'arbre (3) du tambour d'enregistrement (1) avec un doigt de commande (30) comme organe de commande pour ouvrir et fermer les vannes (27) disposées circulairement autour du disque de commande (29),
- un dispositif d'arrêt (31 ; 32 ; 33) pour bloquer le disque de commande (29) dans une position prescrite fixe par rapport au tambour d'enregistrement (1) où le disque de commande (29) est logé sur le tourillon d'arbre (3) par ajustement en glissement de sorte que le disque de commande (29) non bloqué par le dispositif d'arrêt(31 ; 32 ; 33) est entraîné sans glissement par le tourillon d'arbre (3) du tambour d'enregistrement (1) qui tourne.

3. Dispositif selon la revendication 2, caractérisé en ce que le dispositif d'arrêt (31 ; 32 ; 33) est constitué d'une tige d'arrêt (33) réglable à l'aide d'un organe de réglage (32) fixe, qui vient en prise dans une rainure (31) se trouvant sur le disque de commande (29).

4. Dispositif selon l'une des revendications 1 à 3, caractérisé en ce que chaque vanne (27) est pilotable par actionnement d'un galet de commande (47) fixé sur coulisseau (45) par le doigt de commande (30) du disque de commande (29), en position de travail << ouverte >>, où les vannes (27) prennent leur position de travail stable << fermée >> sans actionner les galets de commande (47) par le doigt de commande (30).

5. Dispositif selon l'une des revendications 1 à 4, caractérisé en ce qu'on utilise des vannes (27) avec deux positions de travail stables.

6. Dispositif selon l'une des revendications 1 à 5, caractérisé en ce que :
- le tambour d'enregistrement (1) est en forme de cylindre creux (40), dans la paroi (8) duquel passent les canaux d'aspiration (7) et dont les faces frontales sont obturées par des couvercles (12) en forme de disque dont au moins l'un a un orifice central (41),
- la face interne du couvercle (2) dirigée vers l'intérieur du tambour, présente des rainures (42) s'étendant essentiellement radialement,
- la face externe du couvercle (2) est munie de trous (43) disposés circulairement autour de l'axe du tambour, qui débouchent dans les rainures (42) et dans lesquels sont placés les vannes (27),
- une pièce de boîtier (48) cylindrique est fixée à la surface interne du couvercle (2) et par son prolongement (49) dans l'orifice central (41) du couvercle (2), les rainures (42) recouvertes hermétiquement par la pièce de boîtier (48) dans le couvercle (2) forment les conduites de répartition (26) reliées aux canaux d'aspiration (7), le tourillon d'arbre (3) qui présente l'orifice d'aspiration (9) est fixé sur le prolongement (49) de la pièce de boîtier (48) dépassant par l'orifice (41) du couvercle (2),
- la chambre interne de la pièce de boîtier (48) forme la chambre à vide (25) qui communique par un orifice (9′) dans la pièce de boîtier (48) avec l'orifice d'aspiration (9) du tourillon d'arbre (3),
- la face frontale (51) dirigée vers le couvercle (2) de la pièce de boîtier (48) présente des trous (52) disposés circulairement, qui relient la chambre à vide (25) aux rainures (42) et qui sont implantés de telle façon qu'on peut les obturer par les vannes (27), et
- le disque de commande (29) est logé au moyen d'un disque (54) sur le prolongement (53) du tourillon d'arbre (3).

7. Dispositif selon l'une des revendications 1 à 6, caractérisé en ce que :
- les canaux d'aspiration (7) dans le tambour d'enregistrement (1) présentent des parois de séparation (58), ce qui partage le tambour d'enregistrement (1) en deux domaines de vide séparés (59 ; 60), et
- à chaque domaine de vide (59 ; 60) correspond un répartiteur de vide commandable séparément (61 ; 62).

8. Dispositif selon la revendication 7, caractérisé en ce que la chambre à vide (25′) de l'un des répartiteurs de vide (61) est reliée par un tube (63) s'étendant axialement dans la chambre intérieure du tambour à la chambre de vide (25) de l'autre répartiteur de vide (62).

9. Dispositif selon l'une des revendications 1 à 8, caractérisé en ce que la chambre à vide (25) présente un orifice d'étranglement.

10. Dispositif selon l'une des revendications 1 à 9, caractérisé par :
- une face de transport (14) du matériau d'enregistrement (22) dans le domaine du tambour d'enregistrement, essentiellement tangentiel à celui-ci,
- un moyen de transport (15) pour transporter le matériau d'enregistrement (22) jusqu'au tambour d'enregistrement (1),
- un galet de pression (17) qui peut pivoter dans ce domaine vers le tambour d'enregistrement (1), où le début du matériau d'enregistrement (22) transporté par la face de transport (14) vers le tambour d'enregistrement (1), vient en contact avec la surface du tambour,
- un entraînement de positionnement (16) pouvant pivoter pendant l'application sur le tambour d'enregistrement (1) pour faire tourner le tambour d'enregistrement (1), et
- un moteur (23) couplé au tambour d'enregistrement (1) pour faire tourner le tambour d'enregistrement (1) lors de l'exposition à la lumière, par point et par ligne de matériau d'enregistrement (22).

11. Dispositif selon la revendication 10, caractérisé en ce que les moyens de transport (15) sont constitués de cylindres de transport placés en dessous et au-dessus de la force de transport dont au moins un est entraînable.

12. Dispositif selon l'une des revendications 1 à 11, caractérisé en ce que pour réduire l'importance du vide pendant l'application du matériau d'enregistrement (22) entre la chambre à vide (25) et la pompe à vide (13) une vanne d'évent (12) connectable et déconnectable est branchée.

13. Dispositif selon l'une des revendications 1 à 12, caractérisé en ce que les écartements de rangées de trous d'aspiration (6) sur le tambour d'enregistrement (1) sont adaptés aux longueurs périphériques des formats habituels du matériau d'enregistrement à appliquer (22).

14. Dispositif selon l'une des revendications 1 à 13, caractérisé en ce que le tambour d'enregistrement (1) présente une marque d'application (34) qui définit la rangée de trous d'aspiration (6) sur laquelle est fixé chaque domaine initial du matériau d'enregistrement (22) à appliquer.

15. Procédé d'application de matériau d'enregistrement en feuille sur le tambour d'enregistrement d'un appareil de reproduction pour l'exposition à la lumière, par point et par ligne du matériau d'enregistrement par un organe d'enregistrement, dans lequel la surface d'enveloppe du tambour d'enregistrement présente des rangées de trous s'étendant essentiellement axialement, qu'on relie à une pompe à vide pour fixer le matériau d'enregistrement par aspiration du vide sur le tambour d'enregistrement, caractérisé en ce qu'on fait tourner le tambour d'enregistrement (1) au moyen de l'entraînement de positionnement (16) en une position de départ d'application, où la marque d'application (34) sur le tambour d'enregistrement (1) se trouve sous le galet de pression (17), tandis que la marque d'application (34) repère la rangée de trous d'aspiration où doit reposer la zone initiale du matériau d'enregistrement (22) à appliquer,
- on démarre les moyens de transport (15) et le matériau d'enregistrement (22) est transporté via la face de transport (14) au tambour d'enregistrement (1) jusqu'au domaine initial de matériau d'enregistrement (22) sur lequel se trouve la première rangée de trous d'aspiration repérée par la marque d'application (34),
- le galet de pression (17) est abaissé sur le tambour d'enregistrement (1),
- la pompe à vide est enclenchée (13), la première rangée de trous d'aspiration est mise sous vide par ouverture de la vanne associée (27) et la zone initiale du matériau d'enregistrement (22) est aspiré,
- l'entraînement de positionnement (16) est à nouveau enclenché et par l'ouverture d'autres vannes (27) on branche successivement d'autres rangées de trous d'aspiration en fonction de l'avancement de l'enroulement du matériau d'enregistrement, autour du tambour d'enregistrement (1) en cours de rotation, et on les soumet au vide,
- le branchement d'autres rangées de trous d'aspiration en fonction de la longueur périphérique correspondante du matériau d'enregistrement (22) est terminé au niveau de la rangée de trous d'aspiration où se trouve la zone terminale du matériau d'enregistrement (22),
- on arête l'entraînement de positionnement (16) et on le pivote quand le tambour d'enregistrement (1) se trouve dans la position de départ de l'exposition à la lumière, où la marque d'application (34) est dans l'axe optique de l'organe d'enregistrement, on relève le galet de pression (17) et on démarre le moteur (23) pour l'exposition à la lumière par point et par ligne du matériau d'enregistrement (22),
- après l'exposition à la lumière on arrête le moteur (23), on déplace à nouveau l'entraînement de positionnement (16) sur le tambour d'enregistrement (1) et on démarre,
- on déscelle le matériau d'enregistrement exposé (22) du tambour d'enregistrement (1) et on arrête la pompe à vide (13),
- on coupe les rangées de trous d'aspiration mis en circuit lors de l'application par fermeture des vannes (27), et
- on fait tourner le tambour d'enregistrement (1) par l'entraînement de positionnement (16) à nouveau en position de départ d'application.

16. Procédé selon la revendication 15, caractérisé en ce que le disque de commande (29) dans la position de départ de l'application du tambour d'enregistrement (1) où le dispositif d'arrêt (31 ; 32 ; 33) ouvre la vanne (27) dans le disque de commande (29) bloqué dans cette position, vanne qui correspond à la première rangée de trous d'aspiration marquée par la marque d'application (34).

17. Procédé selon la revendication 15 ou 16, caractérisé en ce que le disque de commande (29) est bloqué lors de l'application du matériau d'enregistrement (22), ainsi les vannes (27) correspondant à chaque rangée de trous sont déplacées par le tambour d'enregistrement (1) en rotation en face du doigt de commande (30) du disque de commande (29) et sont ouvertes.

18. Procédé selon l'une des revendication 15 à 17, caractérisé en ce que le blocage du disque de commande (29) est annulé quand le doigt de commande (30) du disque de commande (29) a ouvert la vanne (27) correspondant à la rangée de trous d'aspiration, où se trouve le domaine terminal du matériau d'enregistrement (22).

19. Procédé selon l'une des revendications 15 à 18, caractérisé en ce que pour fermer les vannes (27) on bloque à nouveau le disque de commande (29) et on fait passer les vannes (27) devant le doigt de commande (30) du disque bloqué (29) par rotation du tambour d'enregistrement (1) dans le sens contraire du sens d'application.

20. Procédé selon l'une des revendications 15 à 19, caractérisé en ce qu'on diminue la valeur nominale du vide prévu pour la phase d'exposition à la lumière, par ouverture de la vanne intermédiaire (12) pour la durée de l'application, ce qui permet d'aspirer le matériau d'enregistrement (22) sous une dépression moins forte.
